# DEMANDE DE BREVET EUROPEEN

(11) **EP 2 180 684 A2**
(43) Date de publication de la demande: **28.04.2010**
(21) Numéro de dépôt: 09290798.9
(22) Date de dépôt: 19.10.2009
(51) Int. Cl.: H04N 1/00

(54) **Appareil de traitement de feuilles équipé d'un capteur d'état**

(30) Priorité: 21.10.2008 FR 0805820
(71) Demandeur: SAGEM COMMUNICATIONS SAS, 92500 Rueil Malmaison (FR)
(72) Inventeur: Pascual, Bertrand, 92700 - Colombes (FR)
(74) Mandataire: Lavialle, Bruno François Stéphane

(57) **Abrégé**

L'invention concerne un appareil de traitement de feuilles, comportant un bac d'approvisionnement équipé d'un capteur détectant la présence de feuilles dans ce bac.

L'appareil comporte un organe (4) portant une matrice photosensible et une source lumineuse (5), chaque feuille (12, 13, 14) étant déplacée devant cet organe (4) pour en acquérir une image. Il comporte également un capteur incluant un doigt (15) mobile entre une position déployée et une position rétractée, pour identifier un état mécanique de l'appareil ou d'un de ses composants. Le capteur comprend un obturateur (17) lié en mouvement au doigt (15) en étant mobile entre une position fermée dans laquelle il réfléchit vers la matrice photosensible (6) de la lumière issue d'une portion de la source lumineuse (5), et une position ouverte dans laquelle il laisse passer la lumière issue de cette portion de la source lumineuse (5).

L'invention s'applique notamment aux scanners et aux copieurs.

## Description

L'invention concerne un appareil de traitement de feuilles tel qu'un scanner ou un copieur, comportant un capteur pour identifier par exemple l'état vide ou non vide d'un bac d'approvisionnement, ou la position d'une feuille ou encore l'état ouvert ou fermé d'un capot de cet appareil.

### ARRIERE PLAN DE L'INVENTION

Les scanners et copieurs connus comportent généralement un bac d'approvisionnement dans lequel sont empilées les feuilles à traiter, ce bac étant équipé d'un capteur relié à une unité de pilotage, pour détecter si des feuilles sont ou non présentes dans ce bac.

Lorsque l'utilisateur active un tel scanner ou copieur, l'unité de pilotage déclenche le traitement des feuilles du bac d'approvisionnement lorsque la présence de feuilles est détectée dans celui-ci.

Les feuilles sont alors déplacées les unes après les autres le long d'un chemin de traitement, pour être présentées à un organe comportant une source lumineuse et une matrice photosensible, de manière à acquérir une image d'au moins une face de chaque feuille.

Lorsque toutes les feuilles du bac d'approvisionnement ont été traitées, le capteur détecte que le bac est vide, l'unité de traitement provoquant alors l'arrêt du traitement.

Dans le cas où l'utilisateur commande le traitement de feuilles alors que le bac d'approvisionnement est vide, l'unité de pilotage peut informer l'utilisateur du fait qu'il a manifestement omis de charger les feuilles à traiter. Elle peut aussi simplement prendre en compte cette information pour provoquer le traitement d'une feuille présente dans une autre source d'alimentation de l'appareil.

D'autres capteurs peuvent aussi être prévus, notamment pour identifier la position des feuilles en cours de traitement, le long du chemin dans lequel elles sont déplacées. Les différents capteurs reliés à l'unité de commande permettent ainsi à l'unité de pilotage de déterminer un état courant de l'appareil afin de le piloter de manière optimale.

Les capteurs utilisés comportent typiquement une fourche optique associée à une pièce mobile entre une première position dans laquelle elle est écartée de la fourche, et une seconde position dans laquelle elle est placée entre les branches de cette fourche.

Les deux branches de cette fourche portent respectivement une cellule émettrice de lumière et une cellule réceptrice photosensible, pour émettre un premier signal lorsque la lumière générée par la cellule émettrice est reçue par la cellule réceptrice, et un second signal lorsque la cellule réceptrice ne perçoit pas de lumière.

L'intégration de ces capteurs reste coûteuse puisqu'elle nécessite de les positionner précisément, de relier chacun d'eux à une voie d'alimentation électrique, et de les relier électriquement à l'unité de commande. Ceci est encore accentué par le fait que la quantité de capteurs équipant un tel appareil est de plus en plus importante.

### OBJET DE L'INVENTION

Le but de l'invention est de proposer une solution pour remédier aux inconvénients ci-dessus en réduisant le coût d'intégration des capteurs dans un appareil de traitement de feuilles.

### RESUME DE L'INVENTION

A cet effet, l'invention a pour objet un appareil de traitement de feuilles, comportant un organe incluant une matrice photosensible et une source lumineuse, chaque feuille étant déplacée devant cet organe pour acquérir une image d'une face de cette feuille afin de la reproduire et/ou de la mémoriser, et un capteur incluant un doigt mobile entre une position déployée et une position rétractée, pour identifier un état mécanique de l'appareil ou d'un de ses composants, **caractérisé en ce qu**'il comporte un obturateur lié en mouvement au doigt en étant mobile entre une position fermée dans laquelle il réfléchit vers la matrice photosensible de la lumière issue d'une portion de la source lumineuse, et une position ouverte dans laquelle il laisse passer la lumière issue de cette portion de la source lumineuse.

Avec cette solution, il n'est plus nécessaire de prévoir une fourche optique pour constituer le capteur, puisque c'est une portion de la matrice photosensible qui est utilisée pour déterminer si le doigt est déployé ou rétracté.

L'invention concerne également un appareil tel que défini ci-dessus, dans lequel le doigt et l'obturateur sont rigidement solidarisés l'un à l'autre en étant portés par un levier mobile.

L'invention concerne également un appareil tel que défini ci-dessus, dans lequel le doigt et l'obturateur sont situés à des extrémités opposées du levier, et dans lequel le levier est mobile en rotation par rapport à un axe situé entre le doigt et l'obturateur.

L'invention concerne également un appareil tel que défini ci-dessus, comportant un bac d'approvisionnement orienté de façon inclinée, et dans lequel le doigt est situé à une extrémité inférieure de ce bac d'approvisionnement de manière à se rétracter dès qu'une ou plusieurs feuilles sont placées dans ce bac de chargement.

L'invention concerne également un appareil tel que défini ci-dessus, comportant un chemin dans lequel sont déplacées les feuilles à traiter, le doigt étant situé au niveau de ce chemin pour être déplacé vers sa position rétractée par le passage à hauteur de ce doigt d'un bord avant d'une feuille déplacée dans le chemin, de manière à identifier la position de cette feuille dans le chemin.

L'invention concerne également un appareil tel que défini ci-dessus, dans lequel le doigt est situé au niveau d'un capot de l'appareil de manière à identifier l'état ouvert ou fermé de ce capot.

L'invention concerne également un appareil tel que défini ci-dessus, comportant plusieurs capteurs incluant chacun un obturateur, chaque obturateur étant situé au niveau d'une portion de l'organe qui lui est propre.

### BREVE DESCRIPTION DES FIGURES

La figure 1 est une représentation schématique en coupe latérale de l'appareil selon l'invention lorsque le doigt de son capteur est déployé ;

La figure 2 est une représentation schématique en coupe latérale de l'appareil selon l'invention lorsque le doigt de son capteur est rétracé ;

La figure 3 est une représentation schématique en perspective de l'appareil selon l'invention lorsque le doigt de son capteur est déployé ;

La figure 4 est une représentation schématique en perspective de l'appareil selon l'invention lorsque le doigt de son capteur est rétracté.

### DESCRIPTION DETAILLEE DE L'INVENTION

L'appareil selon l'invention qui est un scanner repéré par 1 dans l'exemple des figures, comporte un bac 2 d'approvisionnement en feuilles à traiter, un chemin de traitement 3 dans lequel chaque feuille est déplacée pour être traitée, et un organe 4 qui constitue le scanner à proprement parler de l'appareil.

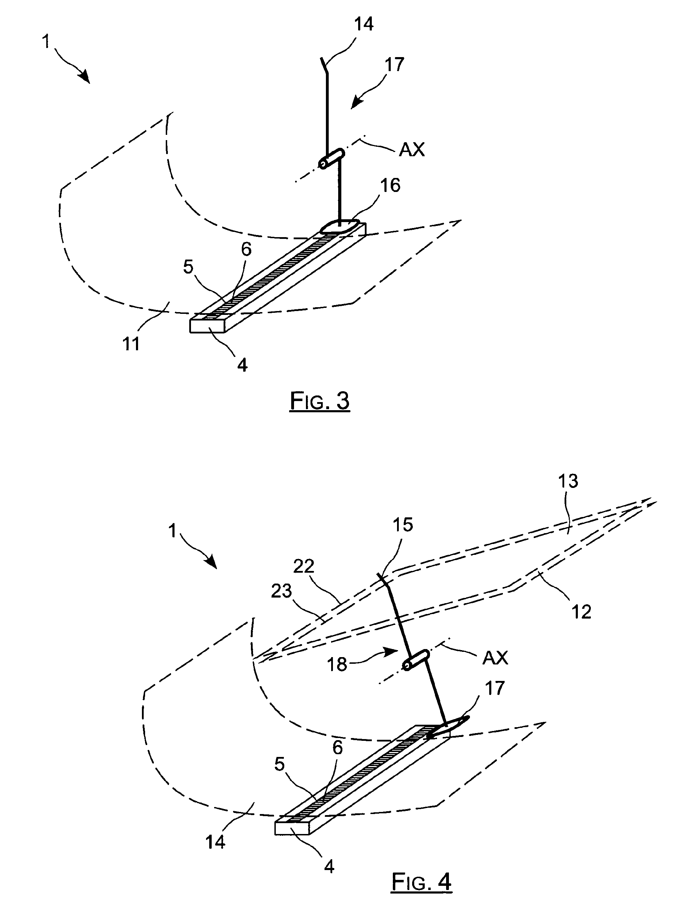

L'organe 4 qui a une forme rectiligne de réglette, comporte une source lumineuse 5 et une matrice photosensible 6 de type CCD ou CIS, qui sont représentées conjointement par une unique bande rectangulaire dans les figures 3 et 4. Il est orienté transversalement, c'est à dire selon une direction parallèle à celle des bords avant et arrière d'une feuille déplacée dans le chemin 3.

Chaque feuille est ainsi traitée en étant déplacée le long du chemin 3 pour présenter l'une de ses faces à cet organe 4. Celui-ci balaye ainsi entièrement la face en question, afin d'en acquérir une image.

Comme visible dans les figures, un rouleau dit de chargement 7 orienté transversalement est prévu au dessus du bac d'approvisionnement 2 pour déplacer chaque feuille depuis le bac d'approvisionnement 2, vers le chemin de traitement 3. Trois paires de rouleaux d'entraînement, repérées par 8, 9 et 10 sont disposées le long de ce chemin 3 pour déplacer chaque feuille en cours de traitement devant l'organe 4.

Chaque paire de rouleaux 8, 9, 10 comporte deux rouleaux situés de part et d'autre du chemin, la première paire 8 étant la plus proche du bac d'approvisionnement 2, la troisième paire 10 étant la plus proche d'une extrémité libre du chemin 3 par laquelle les feuilles sont éjectées après traitement. La seconde paire 9 de rouleaux d'entraînement est quant à elle située entre les paires 8 et 10 le long du chemin 3.

Le rouleau de chargement 7 ainsi que les rouleaux d'entraînement des paires 8, 9 et 10 sont orientés transversalement.

En fonctionnement, lorsque l'appareil est activé, le rouleau de chargement 7 est abaissé sur le bac d'approvisionnement 2 et mis en rotation pour engager la feuille supérieure du bac d'approvisionnement 2, dans le chemin 3.

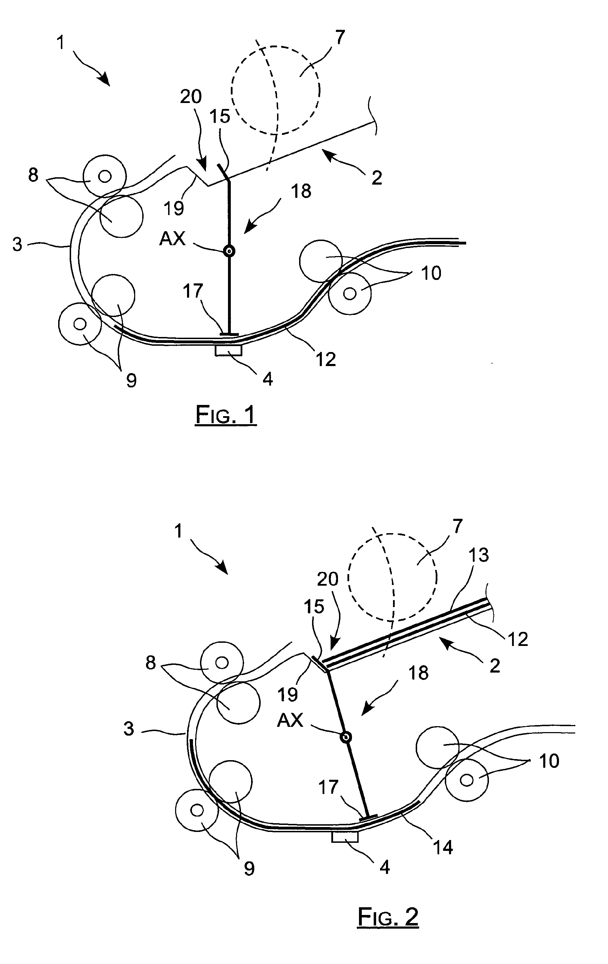

Dans le cas de la figure 2, deux feuilles 12 et 13 à traiter sont empilées dans le bac d'approvisionnement 2, le rouleau de chargement 7 étant en position haute. Une autre feuille repérée par 14 est en cours de traitement en étant déplacée le long du chemin 3, pour que l'organe 4 balaye la totalité d'une face de cette feuille 14 afin d'en acquérir une image.

Cet appareil est équipé d'un capteur de présence de feuilles dans le bac d'approvisionnement 2. Ce capteur comporte un doigt 15 et un obturateur 17 qui sont tous deux portés par un levier 18, ce levier étant mobile en rotation autour d'un axe repéré par AX qui est orienté transversalement.

Le doigt 15 et l'obturateur 17 sont situés aux extrémités opposées de ce levier 18 avec lequel ils constituent un tout rigide, l'axe de rotation AX étant situé sensiblement à mi-longueur du levier 18.

Comme visible dans les figures, le doigt 15 qui est situé à une extrémité supérieure du levier 18 se trouve dans une région correspondant à une partie avant du bac d'approvisionnement 2, repérée par 19, alors que l'obturateur 17 qui est situé à l'extrémité inférieure du levier 18 se trouve dans une région proche d'une extrémité de l'organe 4.

Le levier 18, avec le doigt 15 et l'obturateur 17, est mobile entre une première position sensiblement verticale, correspondant à celle qu'il occupe dans les figures 1 et 3, et une seconde position sensiblement inclinée correspondant à celle qu'il occupe dans les figures 2 et 4.

Des moyens de rappel non représentés tendent continûment à ramener le levier 18 vers sa première position, en exerçant sur celui-ci un effort de faible intensité. Ces moyens de rappel peuvent être assurés par une position du centre de gravité du levier 18 décalée vers le bas, par rapport à l'axe AX.

Lorsque le levier 18 est dans la première position, le doigt 15 occupe une position déployée, dans laquelle il est espacé d'une face avant 19 du bac d'approvisionnement 2, tout en restant situé dans une région avant de ce bac 2. L'obturateur 17 occupe alors une position dite fermée, dans laquelle il couvre une portion de l'organe 4 correspondant à l'une de ses extrémités.

Dans ce cas, de la lumière émise par la portion de la source lumineuse 5 correspondant à l'extrémité de l'organe 4 est renvoyée par l'obturateur 17 vers une portion de la matrice photosensible 6 située à l'extrémité de cet organe 4.

Comme illustré sur les figures, le bac d'approvisionnement 2 est incliné de telle manière que sa partie avant 20, qui est la plus proche du chemin 3, soit sa partie la plus basse. Ainsi, lorsque des feuilles 12 et 13 sont empilées dans ce bac 2, elles glissent vers l'avant de ce bac 2, jusqu'à ce que les bords avant 22 et 23 de ces feuilles viennent en appui contre la face avant 19.

Les bords avant 22 et 23 exercent alors un effort sur le doigt 15 pour le placer dans une position rétractée, dans laquelle il est en appui contre la face avant 19. Le levier 18 occupe alors la seconde position, dans laquelle il est incliné par rapport à la verticale, l'obturateur 17 occupant alors une position dite ouverte, dans laquelle il est décalé par rapport à l'extrémité de l'organe 4.

Dans ce cas, de la lumière émise par la portion de source lumineuse correspondant à l'extrémité de l'organe 4, n'est pas réfléchie par l'obturateur 17 puisque celui-ci est alors décalé par rapport à la matrice photosensible 6 de cet organe 4.

Ainsi, grâce à l'obturateur 17, la position du levier 18, c'est-à-dire celle du doigt 15 est détectée directement par analyse des données issues de l'organe 4.

De la lumière est perçue par la matrice photosensible 6 dans la portion correspondant à l'extrémité de l'organe 4, lorsque l'obturateur 17 couvre cette portion, c'est à dire lorsque le doigt 15 est déployé, ce qui correspond au cas où le bac d'approvisionnement 2 est vide, comme dans les figures 1 et 3.

Au contraire, la portion de matrice photosensible 6 correspondant à l'extrémité du capteur 4 ne perçoit pas de lumière, ou peu de lumière lorsque l'obturateur 17 ne couvre pas cette portion. Ceci correspond au cas où le doigt 15 est rétracté, du fait de la présence de feuilles dans le bac d'approvisionnement 2, ce qui correspond aux figures 2 et 4.

Comme visible dans les figures, l'organe 4 a une longueur sensiblement supérieure à la largeur des feuilles qu'il est destiné à scanner. La majorité de sa longueur est dédiée à l'acquisition des données représentatives des feuilles à traiter, alors que l'une ou l'autre de ses extrémités est dédiée à la détermination de la position du capteur de présence de feuilles dans le bac d'approvisionnement.

En d'autres termes, une faible partie des pixels de la matrice photosensible 6 est exploitée non pas pour l'acquisition des données représentatives de la feuille à traiter, mais pour la détermination de l'état du capteur de présence de feuilles dans le bac d'approvisionnement 2.

Dans l'exemple des figures, l'invention est appliquée à un capteur de présence de feuilles dans le bac d'approvisionnement. Mais l'invention s'applique aux autres capteurs équipant usuellement un tel appareil de type scanner ou copieur.

En particulier, l'invention peut aussi bien être appliquée à un capteur destiné à déterminer la position de la feuille dans le chemin de déplacement 3, par exemple de manière à enclencher l'acquisition des données issues de l'organe 4 dès que la feuille approche de l'organe 4.

De façon analogue, l'invention peut aussi être appliquée à un capteur destiné à déterminer si un capot ou bien un tiroir d'un tel appareil est dans un état ouvert ou bien fermé. Dans l'exemple illustré schématiquement sur les figures, l'appareil est équipé d'un seul capteur qui est alloué à une région de l'organe 4, mais l'appareil peut être équipé de plusieurs capteurs comportant chacun un obturateur apte couvrir ou découvrir une portion de l'organe 4 qui lui est alors dédiée.

Ainsi, d'une manière générale, l'invention s'applique aux capteurs d'un appareil de traitement tel qu'un scanner ou un copieur, qui permettent de caractériser l'état mécanique de cet appareil.

Dans l'exemple illustré sur les figures, l'obturateur est situé directement au dessus de l'organe 4, mais il peut aussi être espacé de cet organe, des miroirs, ou une fibre optique étant alors interposés entre cet organe et l'obturateur de manière à canaliser le flux lumineux issu de l'organe 4, vers la région où se situe l'obturateur.

D'autre part, dans l'exemple des figures, le doigt et l'obturateur sont liés en mouvement en étant rigidement solidaires l'un de l'autre. Mais le doigt et l'obturateur peuvent aussi faire partie de pièces distinctes qui sont liées en mouvement l'une à l'autre par des moyens mécaniques intermédiaires.

Dans le cadre de la détection de présence de feuilles dans le bac d'approvisionnement, il est aussi possible de se dispenser d'obturateur et de levier, en prévoyant au niveau du fond du bac d'approvisionnement, une ouverture ou fenêtre située en vis-à-vis d'une extrémité de l'organe 4.

Dans ce cas, lorsqu'une ou plusieurs feuilles sont présentes dans le bac, la feuille inférieure est visible par cette ouverture ou fenêtre. L'organe 4 peut alors identifier la couleur blanche au niveau des pixels situés à l'extrémité de cet organe 4 située en vis-à-vis de la fenêtre.

Lorsque aucune feuille n'est présente dans le bac d'approvisionnement, l'organe 4 identifie alors une couleur sombre au niveau des pixels situés en vis-à-vis de la fenêtre ou ouverture.

## Revendications

1. Appareil (1) de traitement de feuilles, comportant un organe (4) incluant une matrice photosensible et une source lumineuse (5), chaque feuille (12, 13, 14) étant déplacée devant cet organe (4) pour acquérir une image d'une face de cette feuille afin de la reproduire et/ou de la mémoriser, et un capteur incluant un doigt (15) mobile entre une position déployée et une position rétractée, pour identifier un état de l'appareil ou d'un de ses composants, **caractérisé en ce qu'**il comporte un obturateur (17) lié en mouvement au doigt (15) en étant mobile entre une position fermée dans laquelle il réfléchit vers la matrice photosensible (6) de la lumière issue d'une portion de la source lumineuse (5), et une position ouverte dans laquelle il laisse passer la lumière issue de cette portion de la source lumineuse (5).

2. Appareil selon la revendication 1, dans lequel le doigt (15) et l'obturateur (17) sont rigidement solidarisés l'un à l'autre en étant portés par un levier mobile (18).

3. Appareil selon la revendication 2, dans lequel le doigt (15) et l'obturateur (17) sont situés à des extrémités opposées du levier (18), et dans lequel le levier (18) est mobile en rotation par rapport à un axe (AX) situé entre le doigt (15) et l'obturateur (17).

4. Appareil selon l'une des revendications précédentes, comportant un bac d'approvisionnement (2) orienté de façon inclinée, et dans lequel le doigt (15) est situé à une extrémité inférieure (20) de ce bac d'approvisionnement (2) de manière à se rétracter dès qu'une ou plusieurs feuilles (12, 13) sont placées dans ce bac de chargement (2).

5. Appareil selon l'une des revendications 1 à 3, comportant un chemin (3) dans lequel sont déplacées les feuilles à traiter (12, 13, 14), le doigt (15) étant situé au niveau de ce chemin (3) pour être déplacé vers sa position rétractée par le passage à hauteur de ce doigt (15) d'un bord avant d'une feuille déplacée dans ce chemin, de manière à identifier la position de cette feuille dans le chemin (3).

6. Appareil selon la revendication 1 ou 3, dans lequel le doigt (15) est situé au niveau d'un capot de l'appareil (1) de manière à identifier l'état ouvert ou fermé de ce capot.

7. Appareil selon l'une des revendications 1 à 3, comportant plusieurs capteurs incluant chacun un obturateur, chaque obturateur (17) étant situé au niveau d'une portion de l'organe (4) qui lui est propre.
